**Europäisches Patentamt**

**European Patent Office**

**Office européen des brevets**

(19)

(11) Veröffentlichungsnummer : **0 354 218 B1**

(12) **EUROPÄISCHE PATENTSCHRIFT**

(45) Veröffentlichungstag der Patentschrift :
**15.01.92 Patentblatt 92/03**

(51) Int. Cl.⁵ : **G01G 3/12, G01G 23/01**

(21) Anmeldenummer : **88907593.3**

(22) Anmeldetag : **20.09.88**

(86) Internationale Anmeldenummer :
**PCT/CH88/00165**

(87) Internationale Veröffentlichungsnummer :
**WO 89/03023 06.04.89 Gazette 89/08**

(54) **VERFAHREN FÜR DIE EICHUNG UND DEN BETRIEB EINER WAAGE.**

(30) Priorität : **30.09.87 CH 3791/87**

(43) Veröffentlichungstag der Anmeldung :
**14.02.90 Patentblatt 90/07**

(45) Bekanntmachung des Hinweises auf die
Patenterteilung :
**15.01.92 Patentblatt 92/03**

(84) Benannte Vertragsstaaten :
**CH DE FR GB IT LI NL SE**

(56) Entgegenhaltungen :
**EP-A- 0 103 747**
**GB-A- 2 104 667**
**GB-A- 2 174 498**
**US-A- 2 767 974**
**US-A- 3 201 983**

(56) Entgegenhaltungen :
**US-A- 4 107 985**
**US-A- 4 212 361**
**US-A- 4 258 811**
**US-A- 4 438 823**

(73) Patentinhaber : **Wirth, Gallo Messtechnik AG**
**Sonnenbergstrasse 55**
**CH-8032 Zürich (CH)**

(72) Erfinder : **GALLO, Mario**
**Krönleinstrasse 1**
**CH-8044 Zürich (CH)**
Erfinder : **WIRTH, Johannes**
**Sonnenbergstr. 55**
**CH-8032 Zürich (CH)**

(74) Vertreter : **Salgo, Reinhold Caspar, Dr.**
**Patentanwalt Aretshalde 160**
**CH-8607 Aathal (CH)**

EP 0 354 218 B1

## Beschreibung

Die vorliegende Erfindung bezieht sich auf das Verfahren für Eichung und Betrieb einer Waage als echtem Massenmesser, bei welcher das Gewicht des Wägegutes mit dem Gewicht einer Referenzmasse verglichen wird, welche Waage nur beim Hersteller geeicht werden muss und sowohl bei Schiefstellung als auch bei vom Normalwert abweichender Schwerebeschleunigung g und beim Vorhandensein von Vertikalbeschleunigungen ohne Nacheichung die Masse des Wägegutes richtig ermittelt, wobei sowohl Schiefstellung als auch Vertikalbeschleunigung einflussmässig grosse Bruchteile der Schwerebeschleunigung g erreichen dürfen. Der kombinierte Einfluss der drei genannten Grössen wird fortan die wirksame Lokalbeschleunigung genannt. Ein Kraftmesser misst primär immer das Gewicht des Wägegutes. Dieses ist bei gegebener Masse abhängig von der lokalen Schwerebeschleunigung g ; es gilt also

$$G = m\,g.$$

Steht der Kraftmesser auf einem unruhigen, aber horizontalen Fundament, so treten zusätzlich dynamische Kräfte auf. Die festgestellte Kraft ist dann :

$$G' = m(g + Z),\ \text{bzw. bei Schiefstellung} : G'' = m(g + Z)\cos\alpha$$

Ein reiner Kraftmesser ist also nur in nivelliertem Zustand auf ruhigem Fundament und beim Normalwert von g, mithin also bei Eichbedingungen zur Ermittlung der Masse des Wägegutes einzusetzen. Sollen sowohl Schiefstellung als auch Unruhe des Fundamentes kompensiert werden, so hat die Massenermittlung über den Vergleich mit einer Referenzmasse zu geschehen, ein Verfahren, das mit der alten — rein mechanischen — Krämerwaage, beispielsweise nach Beranger gelöst wurde. Moderne Ladenwaagen und Wägeautomaten in Abpackstrassen sind — sofern sie auf einer einzigen Kraft : messung basieren — grundsätzlich am Einsatzort zu eichen. Damit wird der lokalen Schwerebeschleunigung Rechnung getragen, und allfällige Fehler im Nivellement sind durch die Eichung ebenfalls berücksichtigt. Bei Waagen mit Referenzmasse — wie beispielsweise in der CH-PS 492961 beschrieben — können Schiefstellungen von mehr als 5% Steigung fehlerfrei berücksichtigt werden. Waagen mit Referenzmasse, wie beispielsweise die in der genannten Patentschrift beschriebene, sind theoretisch völlig unempfindlich auf Nivellierfehler, praktisch jedoch nur bis zu einem bestimmten, kleinen Grenzwinkel. Sowohl die Gewichtskraft der Nutzlast, als auch die der Referenzmasse sind proportional zur wirksamen Lokalbeschleunigung. Dies gilt jedoch streng nur, wenn keine elastischen Vorlasten vorkommen, wie weiter hinten ausführlich gezeigt wird. Soll hingegen auf eine örtliche Nacheichung und auf korrektes Nivellement gänzlich verzichtet werden, so versagen die bisher bekannten Lösungen. Dies ist besonders der Fall, wenn beispielsweise eine Abpackstrasse auf einem Schiff installiert werden soll, wo während der Fahrt auf See das tiefgekühlte Fanggut abgepackt wird, oder bei ortsfesten industriellen Abpackstrassen, die für die Waage eine dynamisch unruhige Umgebung schaffen. Die dabei auftretenden dynamischen Zusatzlasten können leicht 10% der lokalen Schwerebeschleunigung ausmachen und überschreiten. Die Aufgabe, die durch die vorliegende Erfindung gelöst werden soll, besteht darin, das Verfahren für die Eichung und den Betrieb einer Waage zu schaffen, die nur einmal beim Hersteller geeicht werden muss und im Betrieb unter verhältnismässig grossen dynamischen Zusatzlasten und unter unbekannter Schiefstellung die korrekte Masse des Wägegutes feststellt und anzeigt, ohne nachgeeicht werden zu müssen.

Die Lösung der gestellten Aufgabe trägt die im einzigen Patentanspruch genannten Merkmale. Das erfindungsgemässe Verfahren und die dazu geeignete Vorrichtung werden anhand der beiliegenden Zeichnung näher erläutert.

Es zeigen

Fig. 1 eine schematische Darstellung des Aufbaus der Waage,
Fig. 2 eine Seitenansicht dieser Waage,
Fig. 3 den Kraftmesser für das Gewicht der Vergleichsmasse,
Fig. 4 eine schematische Darstellung des Rechners.

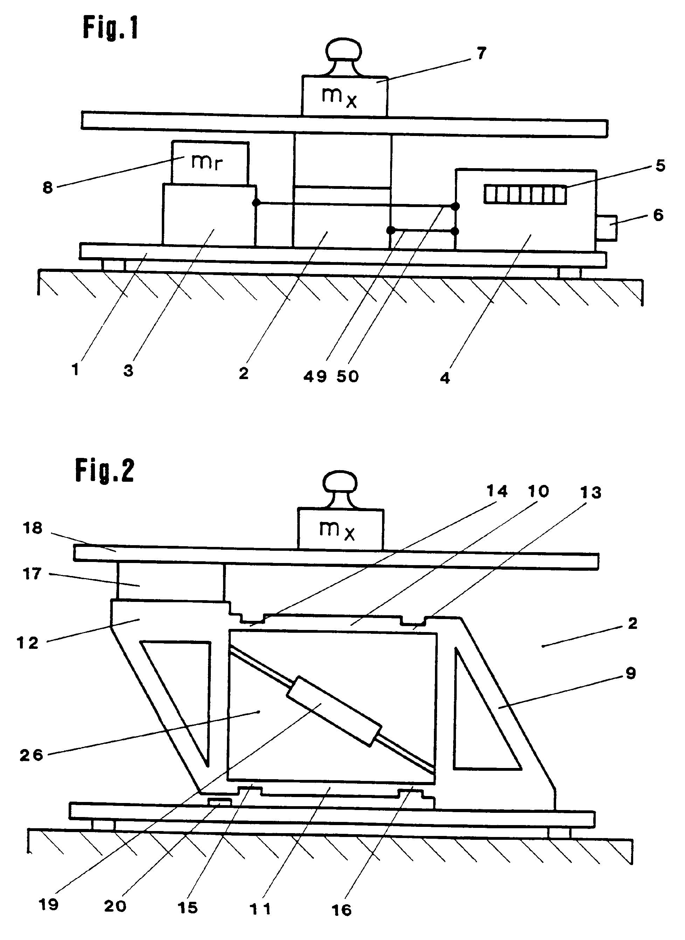

Die schematische Darstellung nach Fig. 1 zeigt auf einer gemeinsamen Grundplatte 1 montiert zwei im wesentlichen gleiche Kraftmesser 2, 3 und einen Rechner 4 mit Anzeigevorrichtung 5 und einem Anschluss 6 für die externe Weiterverarbeitung der Wägedaten und zur Aufnahme von externen Steuerbefehlen. Der Kraftmesser 2 misst die Kraft, mit der das Wägegutdas durch einen symbolischen Gewichtstein 7 (der Masse $m_x$) dargestellt ist — die Waage belastet ; der Kraftmesser 3 misst die Kraft, die von einer konstanten und festmontierten Referenzmasse 8 ($m_r$) ausgeht. Beide Kraftmesser sind mit dem Rechner 4 verbunden, wie durch zwei

2

Leitungen 9, 10 schematisch dargestellt ist.

Bevor auf die weitere Darstellung der Vorrichtung und des erfindungsgemässen Verfahrens eingegangen wird, soll das dem Stand der Technik entsprechende Verfahren kurz geschildert werden :

Unter der Annahme, beide Kraftmesser 2, 3 seien ideale Vorrichtungen, worunter hier verstanden wird, dass nur Massenkräfte vorkommen, wie es dem Stande der Technik entspricht, gilt für die ermittelten Kräfte

$$W_x = m_x(g + Z) \cdot \cos \alpha \quad (1)$$

$$W_r = m_r (g + Z) \cdot \cos \alpha \quad (2)$$

und daraus vom Rechner 4 ermittelt

$$\frac{W_x}{W_x} = \frac{m_x}{m_r} \sim m_x \qquad (3)$$

Die Kraftmesser 2, 3 sind so gebaut, dass sie nur auf Kräfte in ihrer eigenen momentanen Vertikalrichtung reagieren (also ihrem einzigen Freiheitsgrad, sofern die Kräfte über Parallelführungen eingeleitet werden) ; damit fallen Horizontalbeschleunigungen ausser Betracht. Steht die erfindungsgemässe Waage nach Fig. 2 schief, so wirkt sich dies für beide Kraftmesser 2, 3 als Aenderung der lokalen Schwerebeschleunigung g aus; dies lässt das Verhältnis (Gleichung (3)) von $W_x/W_r$ unberührt. Ebenso haben Horizontalbeschleunigungen bei schiefstehender Waage wiederum auf beide Kraftmesser 2, 3 den gleichen Einfluss, womit das Verhältnis $W_x/W_r$ unverändert bleibt. Es bleibt der Einfluss von Winkelbeschleunigungen zu untersuchen.

Sei $\Delta r$ der seitliche Abstand (von Mitte zu Mitte) der beiden Kraftmesser 2, 3 und das momentane Zentrum der Drehbeschleunigung um den Betrag r zum Kraftmesser 2 seitlich versetzt, so wirken (allein aus der Drehbeschleunigung $\alpha$) unterschiedliche Vertikalbeschleunigungen $Z_x$ und $Z_r$ auf die beiden Massen $m_x$ und $m_r$. Dann gilt

$$Z_x = r\alpha$$

$$Z_r = (r + \Delta r) \cdot \alpha$$

und demzufolge

$$\frac{W_x}{W_r} = \frac{m_x \, (g+r\ddot{\alpha})}{m_r(g+r(1\pm \Delta r/r \cdot \ddot{\alpha}))} \approx \frac{m_x}{m_r} \, (1 \mp \frac{\ddot{\alpha}\Delta r}{g+r\ddot{\alpha}} ) \qquad (4)$$

Den Korrekturterm von Gl. (4) gilt es abzuschätzen :

Bei Rollbewegung eines Schiffes, bei der noch gearbeitet wird, und somit auch gewogen werden kann, gilt

$$\alpha \approx 0{,}2 \ sec^{-1}$$

$$r\alpha \approx 0{,}1 \ g$$

Ist ferner

$$r \approx 10 \ m$$

$$\Delta r \approx 0{,}1 \ m$$

folglich

$$\Delta r\alpha \approx 10^{-3}g$$

So stellt sich der Störterm in der Klammer von Gl.(4) nur auf etwa 1%o.

Steht anderseits eine Waage auf einem vibrierenden Tisch in industriell unruhiger Umgebung, so kann $\alpha$ allenfalls unangenehm gross werden, allerdings verbunden auch mit verhältnismässig grossem $\alpha$. Für diesen Fall ist es wesentlich, dass dem Stand der Technik entsprechend, digitale Waagen über eine sogenannte "Ruhekontrolle" verfügen, mit der konsekutive Wägeresultate verglichen werden ; liegt eine Abweichung vor, die über eine vorgegebene Grösse hinausgeht, so wird kein Wägeresultat angezeigt. Mit dieser bekannten Ruhekontrolle werden Fehlanzeigen vermieden bzw. unterdrückt.

Das erfindungsgemässe Verfahren besteht nun im wesentlichen darin, sowohl bei nivellierter, als auch bei schiefstehender Waage die Messwerte des Referenzkraftmessers 3 und des Kraftmessers 2 — bei diesem sowohl in unbelastetem Zustande, als auch mit genau bekannter Vollast — aufzunehmen. Diese Werte werden im Rechner 4 gespeichert (teilweise nach Weiterverarbeitung) ; im Wägebetrieb dienen sie dann dazu, aus dem Messwert für die zu bestimmende Masse deren wahre Grösse zu ermitteln.

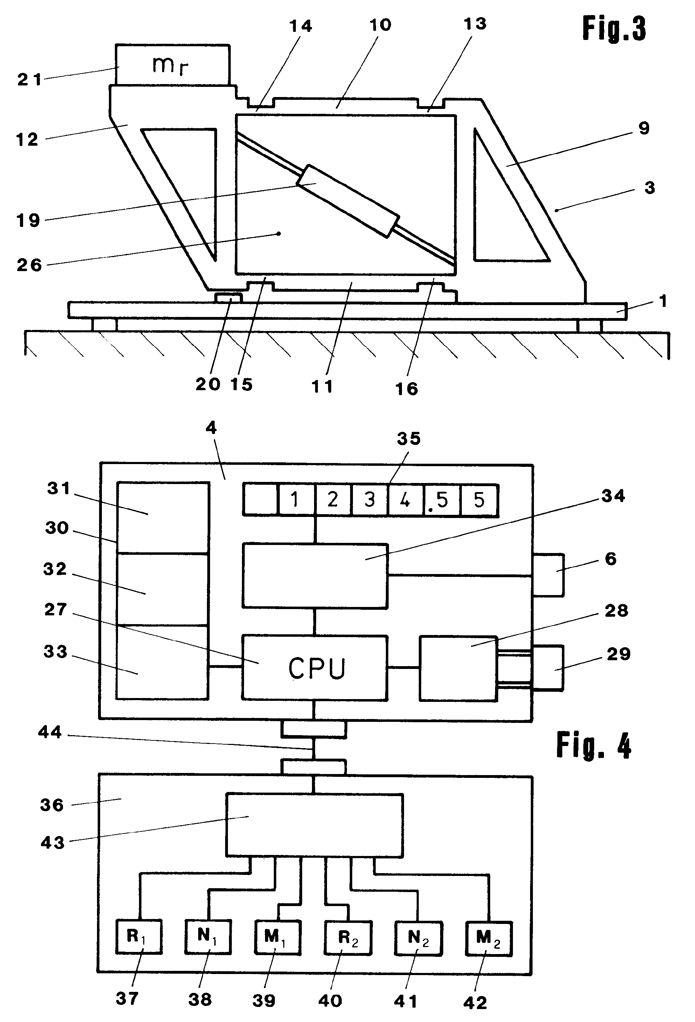

Fig. 2 zeigt ein Ausführungsbeispiel einer für das erfindungsgemässe Verfahren geeigneten Waage in einer Seitenansicht. Man blickt — in bezug auf Fig. 1 — von rechts auf die Waage. Der Rechner 4 wurde in Fig. 2 weggelassen, gehört jedoch erfindungsgemäss zu Vorrichtung und Verfahren. Ebenfalls weggelassen wurde in Fig. 2 — um die Zeichnung nicht zu überlasten — der Kraftmesser 3, der jedoch integrierender Bestandteil von Vorrichtung und Verfahren ist. Er ist dargestellt in den Fig. 3, 4, 5. Der in Fig. 2 dargestellte Kraftmesser 2 zur Messung der von $m_x$ bewirkten Massenkraft ist an sich bekannt aus der CH Pat. Anm.03 040/87-4 (CH-A5-67353) veröffentlicht 15, 3, 90) : Eine elastische Parallelführung 26, bestehend aus einem Gestell 9, zwei im wesentlichen parallelen Platten 10, 11, einem Lastträger 12 und vier elastischen Bandgelenken 13 bis 16, trägt über ein Verbindungsstück 17 eine Waagplatte 18 mit der als Gewichtstein 7 symbolisierten Nutzlast. Die Parallelführung 26 ist gefesselt durch einen Lastaufnehmer 19, der die bei Belastung der Waagplatte 18 entstehende Druckkraft in ein elektrisches — vorzugsweise digitales — Signal umwandelt. Als Lastaufnehmer 19 kommen beispielweise in Frage : Piezolektrische Wandler, Dehnmessstreifen-Wandler, Schwingsaitenwandler, elektromagnetische Kompensatoren, Halleffekt-Wandler.

Ein ein- und feststellbarer Anschlag 20 (in den Figuren vereinfacht dargestellt) begrenzt die — ohnehin kleine — Bewegung des Lastträgers 12 bei Ueberlast nach unten und dient auch als Transportsicherung. Durch die vier rückstellmomentbehafteten Bandgelenke 13 bis 16 und die Nachgiebigkeit des Lastaufnehmers 19 wird eine Kraftteilung bewirkt : Ein Teil der auf den Lastträger 12 wirkenden Kraft fliesst direkt über die Parallelführung 26 in das Gestell 9 ; der andere Teil wird vom Lastaufnehmer 19 gemessen und an das Gestell 9 weiter abgeleitet. Es ist im Erfindungsgedanken mitenthalten, dass auf den Lastaufnehmer 19 eine lastproportionale Zugkraft wirkt.

Fig. 3 zeigt ein Ausführungsbeispiel des Kraftmessers 3, der die von der Referenzmasse 8 ($m_r$) herrührenden Massenkräfte misst. Sein Aufbau ist hier grundsätzlich von der gleichen Art, wie diejenige des Kraftmessers 2 : Eine Parallelführung 26, die aus gleichen und gleich bezeichneten Teilen besteht. Sie trägt anstatt der Waagplatte 18 eine als Quader ausgebildete Referenzmasse 21. Die Kraftmesser 2 und 3 sind parallel zueinander, in gleicher Lage und nahe benachbart auf der Grundplatte 1 befestigt.

Das nachstehend detailliert beschriebene Eich- und Wägeverfahren ist an sich unabhängig vom gewählten Kraftmesser-Typ. Grundsätzlich ist es auch auf beliebige Kraftaufnehmer — selbst analoge — anwendbar. Ob die verwendeten Kraftaufnehmer die zu messende Kraft direkt in ein digitales elektrisches Signal verwandeln, oder ob ein ADWandler nachgeschaltet wird, ist an sich unerheblich.

Fig. 4 zeigt eine schematische Darstellung des Rechners 4. Er enthält eine mit CPU bezeichnete zentrale Recheneinheit 27, die eingangsseitig mit einem Pufferspeicher 29 verbunden ist. Diesem werden über einen Eingangsstecker 29 die Messwerte der zwei Kraftmesser 2, 3 und die Messwerte von allfälligen Temperaturmessfühlern zugeführt. Ferner ist die zentrale Recheneinheit 27 verbunden mit einem Festspeicher (PROM oder EPROM) 30, der in einem Bereich 31, die Eichgrössen (s, S, N, R, P, Q), einem Bereich 32 die Linearisierungsparameter und in einem Bereich 33 die Parameter der Temperaturkompensation permanent gespeichert enthält. Das zentrale Rechenwerk steuert ferner eine AusgabeEinheit 34, die die Wägedaten aufbereitet zur numerischen Darstellung auf einer Anzeigeeinheit 35, oder sie in binär kodierter Form über den Anschluss G an externe Datenverarbeitungssituationen weitergibt, wie beispielsweise Etikettendrucker, Lagerbuchhaltungsrechner u.ä. In Fig. 4 ist der Rechner verbunden dargestellt mit einem Hilfsgerät 36, das nur bei der Eichung benötigt wird. Im Beispiel gemäss Fig. 4 weist dieses sechs Tasten 37-42 auf. Durch Drücken der entsprechenden Taste wird bei der Eichung dem Rechner 4 die Anweisung erteilt, den angewählten Wert zu speichern. Die Kontakte der Tasten 37-42 sind verbunden mit einem Rechenwerk 43, das über eine Leitung 44 mit der zentralen Recheneinheit 27 verbunden wird. Ein nicht gezeichnetes Ausführungsbeispiel verwendet anstelle des Hilfsgerätes 36 einen Tischrechner, der entsprechend programmiert ist.

Das Eich- und das Wägeverfahren gehen aus von folgenden Grundtatsachen und Gleichungen :

Die vom Lastaufnehmer 19 festgestellte Kraft setzt sich zusammen aus Massenkräften $F_m = m(g' + Z)$ und

4

elastischen Kräften, die massenunabhängig sind und als Vorspannung in Erscheinung treten. Mit g′ ist die Komponente der Schwerebeschleunigung bezeichnet, dit mit dem einzigen Freiheitsgrad der Parallelführung zusammenfällt. Da beide Kraftmesser 2, 3 beispielsweise elastisch untersetzend sind, wirkt nur ein bestimmter Anteil der Massenkräfte auf die Lastaufnehmer 19. Ferner gehört zu den Grundtatsachen eine rechnerische Kompensation des Temperaturgangs der beiden Kraftmesser 2, 3, zu welchem Zweck die erfindungsgemässe Waage einen oder mehrere Temperaturfühler enthält, die ebenfalls mit dem Rechner 4 verbunden sind. Eine weitere Grundtatsache besteht darin, dass die beiden Kraftmesser 2, 3 durch mechanische Mittel erzielte lineare Kennlinien aufweisen, oder der Rechner 4 diese Linearisierung vornimmt. Unter diesen Voraussetzungen wird beim Hersteller die Eichung der Waage vorgenommen. Diese erfolgt unter kontrollierten Bedingungen in bezug auf Ruhe, Neigung, Belastung und Temperatur.

Die Ideale Beziehung für die Gewichtskraft G, mit der eine Masse auf einen beliebigen Kraftmesser drückt, ist

$$G = m\, g_o,$$

wo $g_o$ der momentane und lokale Wert der Fallbeschleunigung ist. Steht dieser beliebige Kraftmesser an einem Orte, wo eine andere Fallbeschleunigung wirkt, steht er ferner schief um den Winkel $\alpha$ und unterliegt selbst einer Vertikalbeschleunigung z, so wirkt auf ihn die Kraft G′ :

$$G' = m(g_o + \Delta g + Z)\cos\alpha$$
$$= mg_o(l + h)$$

Aus praktischen Ueberlegungen kann bei der vorliegenden Erfindung der Zusatzterm auf

$$h \leqq 0{,}2$$

beschränkt werden. Ein Kraftmesser kann Aenderungen von g, Neigungseinflüsse und Vertikalbeschleunigung grundsätzlich nicht unterscheiden. Die Eichung kann also prinzipiell auf zwei verschiedenen Winkeln $\alpha_1$ und $\alpha_2$ durchgeführt werden, wobei $\alpha_1 = o$ angestrebt, aber nicht sicher erreicht wird. Zur Eichung werden bei jedem der beiden Winkel $\alpha$ vier Werte ermittelt und im Rechner 4 gespeichert. Es sind dies :

| bei $\alpha_1\ \alpha_2$ | zu speichernde Werte |
|---|---|
| $R_1\ R_2$ | Die Werte des Referenzkraftmessers 3 |
| $N_1\ N_2$ | Die Nullpunktswerte des Kraftmessers 2 bei leerer Waagplatte 18 |
| $M_1\ M_2$ | Die Gewichtswerte des Kraftmessers 2 bei Vollast |
| $S_1\ S_2$ | Die Werte "Bereich", wobei $Sj = Mj - Nj$ |

Bei linearisierter und temperaturkompensierter Wägecharakteristik gelten dabei folgende Beziehungen :

$$R_1 = B + b'rg_o(l + h_1)$$
$$R_2 = B + b'rg_o(l + h_2)$$
$$N_1 = A + a'ng_o(l + h_1)$$
$$N_2 = A + a'ng_o(l + h_2)$$
$$M_1 = A + a'(n + s)g\,(l + h_1)$$
$$M_2 = A + a'(n + s)g\,(l + h_2)$$

und damit

$$S_1 = M_1 - N_1 = a'sg_o(l + h_1)$$
$$S_2 = M_2 - N_2 = a'sg_o(l + h_2)$$

wo

| $A =$ | elastische Vorlast des Kraftmessers 2 |
|---|---|
| $B =$ | elastische Vorlast des Kraftmessers 3 |
| $a' =$ | Uebersetzungskoefizient des Kraftmessers 2 |
| $b' =$ | Uebersetzungskoefizient des Kraftmessers 3 |

n = alle schweren Massen, die bei leerer Waagplatte 18 auf den Kraftmesser 2 wirken

r = alle schweren Massen (im wesentlichen die Referenzmasse 8), die auf den Kraftmesser 3 wirken

s = Masse des Eichgewichtsteins, der auf der Waage Vollast erzeugt.

Damit ist der erste Teil des Eichverfahrens abgeschlossen. Der zweite besteht aus der Verarbeitung der acht Werte im Rechner 4, wobei folgende Rechnungsgrössen erzeugt und wiederum gespeichert werden :

$$P = \frac{N_2 - N_1}{N_1} \bigg/ \frac{R_2 - R_1}{R_1} \qquad (5)$$

$$Q = \frac{S_2 - S_1}{S_1} \bigg/ \frac{R_2 - R_1}{R_1} \qquad (6)$$

Wie mit Hilfe der nun gespeicherten Werte P und Q der richtige Wert m einer unbekannten Masse aus der vom Kraftmesser 2 ermittelten Grösse M rechnerisch bestimmt wird, soll folgende Rechnung zeigen.

Da die Waage zwischen Schiefstellung und kleinerer Fallbeschleunigung grundsätzlich nicht unterscheiden kann, darf man setzen

$$g = g_0(1 + h_1) \qquad \text{"horizontal"} \quad \left.\begin{array}{l} \\ \\ \end{array}\right\} \text{Eichung}$$

$$g_0(1 + h_2) = g\,\frac{1 + h_2}{1 + h_1} = g(1 + e) \qquad \text{"schief"}$$

$$\text{und} \qquad g\,(1 + h_x) = g\,\frac{1 + h_x}{1 + h_1} = g(1 + x) \qquad \text{Betrieb}$$

Setzt man zunächst zur Vereinfachung

$$a'g = a$$

$$b'g = b,$$

so erhalten wir für die sechs Eichungsgrössen :

$R_1 =$ B br
$R_2 =$ B + br(l + e)
$N_1 =$ A + an
$N_2 =$ A + an(l + e)
$S_1 =$ as
$S_2 =$ as(l + e)

und die zwei Messgrössen

$M =$ A + a(n + m) · (l + x)
$R =$ B + br(l + x)

Aus den bei der Eichung bestimmten Grössen lassen sich die absoluten und relativen Differenzen bilden:

$$\Delta N = N_2 - N_1 = a \cdot ne$$

EP 0 354 218 B1

$$\frac{\Delta N}{N_1} = \frac{ane}{A + a \cdot n}$$

ferner

$$\Delta R = R_2 - R_1 = bre$$

$$\frac{\Delta R}{R_1} = \frac{bre}{B + br}$$

und

$$\Delta S = ase$$

$$\frac{\Delta S}{S_1} = \frac{ase}{as} = e$$

Daraus bildet der Rechner die auf die relative Differenz der Referenz bezogenen Grössen

$$P = \frac{\Delta N}{N_1} \Big/ \frac{\Delta R}{R_1} = \frac{ane(B+br)}{(A+an)bre}$$

$$= \frac{an(B+br)}{br(A+an)}$$

und

$$Q = \frac{\Delta S}{S_1} \Big/ \frac{\Delta R}{R_1} = \frac{e(B+br)}{bre}$$

$$= \frac{B+br}{br}$$

Sowohl P und Q sind unabhängig von e ; damit auch unabhängig von g, $g_o$, $\alpha_1$, $\alpha_2$.

Bildet man aus den zwei Gleichungen der Messung noch

$$\frac{M-A}{R-B} = \frac{a(n+m)}{br},$$

so ist man den Parameter $h_x$ über den Ausdruck (I + x) losgeworden und erhält nun folgendes Gleichungssystem.

$$R_1 = B + br \quad (7)$$

$$N_2 = A + an \quad (8)$$

$$S_1 = as \quad (9)$$

$$P = \frac{an(B+br)}{br(A+an)} = \frac{anR_1}{brN_1} \quad (10)$$

$$Q = \frac{B+br}{br} = \frac{R_1}{br} \quad (11)$$

$$\frac{M-A}{R-B} = \frac{a(n+m)}{br} \quad (12)$$

Darin sind bekannt :

a priori :         s
durch messung :    $R_1$, $N_1$, $S_1$, R, M
durch rechtung :    P, Q

und bekannt :

die massenunabhängigen Vorlasten   A, B

die massenabhängige Vorlast        br

die Null-Last-Masse             n

und deren Uebersetzungsfaktor     a

die gesuchte Masse             m

Davon ist als gesuchte Grösse nur m interessant ; die restlichen fünf Grössen werden für die Ermittlung von m nur im Rahmen der hier gezeigten Rechnung benötigt.Die Berechnung des gesuchten Massenwertes m wird im Rechner 4 mit den gespeicherten Grössen s, $R_1$, $S_1$, $N_1$, P, Q und den bei der aktuellen Wägung anfallenden Werten M und R vorgenommen. Die hier durchgeführte Rechnung dient nur zur Erläuterung der Auswerteformel, die weiter unten als Gleichung (20) dargestellt wird..

Aus (9) folgt unmittelbar

$$a = \frac{S_1}{s} \quad (13)$$

ebenso aus (11)

$$br = \frac{R_1}{Q.} \quad (14)$$

Dies in (7) eingesetzt liefert

$$B = R_1 - br = R_1(1 - \frac{1}{Q})$$

$$B = R_1(\frac{Q-1}{Q}) \qquad (15)$$

Aus (10) erhält man

$$an = \frac{PbrN_1}{R_1} \qquad (16)$$

und unter Berücksichtigung von (8)

$$an = \frac{PR_1N_1}{R_1 \, Q} = N_1 \, \frac{P}{Q} \qquad (17)$$

geht man damit in die nach A aufgelöste (8) :

$$A = N_1 - an$$
$$= N_1 - N_1 \, \frac{P}{Q}$$

so ergibt dies

$$A = N_1(\frac{Q-P}{Q}) \qquad (18)$$

Einsetzen von (13) in (17) liefert

$$n = N_1 \cdot \frac{P \cdot s}{QS_1} \qquad (19)$$

Daraus

$$\frac{M - N_1 \cdot \frac{Q-P}{Q}}{R - R_1 \cdot \frac{Q-1}{Q}} = \frac{S \cdot (M + N_1 \cdot \frac{s}{S_1} \cdot \frac{P}{Q}) \cdot Q}{sR_1}$$

woraus man erhält :

$$m = \frac{sR_1}{S \cdot Q} \cdot \frac{M - N_1 \cdot \frac{Q-P}{Q}}{R - R_1 \cdot \frac{Q-1}{Q}} - \frac{sPN_1}{S_1 Q}$$

oder

$$m = \frac{s}{S_1 Q} \left\{ R_1 \frac{M - N_1 \frac{Q-P}{Q}}{R - R_1 \frac{Q-1}{Q}} - PN_1 \right\} \tag{20}$$

Der Rechner 4 enthält — neben den üblichen Elementen für die Bewältigung der arithmetischen Aufgaben und dem nötigen Arbeitsspeicher — ein PROM oder EPROM als Festspeicher zur Speicherung der bei der Eichung ermittelten genannten vier Werte $R_1$, $N_1$, $S_1$, s, und der daraus gebildeten Grössen P und Q. Mit dem genannten Speicherelement ist dafür gesorgt, dass die Speicherung unabhängig ist von der Stromversorgung.

## Patentansprüche

1. Verfahren zum Eichen und zum Betrieb einer Waage mit einer Grundplatte (1), auf welcher zwei unabhängige Kraftmesser (2, 3) mit elastischen Vorlasten montiert sind, von denen der eine Kraftmesser (2) das Gewicht des Wägegutes, der andere Kraftmesser (3) das Gewicht einer Referenzmasse (8, 22, 24) ermittelt, jeder Kraftmesser (2, 3) einen Lastaufnehmer (19) aufweist, der die auf ihn wirkende Druck- oder Zugkraft in ein elektrisches Signal umwandelt, jeder Kraftmesser (2, 3) eine Parallelführung (26) aufweist, und die beiden Kraftmesser so auf der Grundplatte (1) montiert sind, dass die Freiheitsgrade der beiden Parallelführungen (26) untereinander parallel sind und bei horizontaler Waage mit der Richtung der Schwerebeschleunigung g übereinstimmen, die beiden Kraftmesser (2, 3) lineare Kennlinie aufweisen, und ein Rechner (4) vorhanden ist zur rechnerischen Verarbeitung der von den Kraftmessern (2, 3) abgegebenen elektrischen Signale und zur Aufnahme externer Steuerbefehle, dadurch gekennzeichnet, dass,
— bei der Eichung einerseits bei horizontaler Waage, anderseits bei um einen Winkel $\alpha$ schiefgestellten Waage, die folgenden, durch die Kraftmesser (2, 3) ermittelten Werte im Festspeicher gespeichert werden: Bei leerer Waagplatte (18) durch den einen Kraftmesser (2) die Werte $N_1$, $N_2$ und durch den anderen Kraftmesser (3) die Werte $R_1$, $R_2$, bei Vollast — verursacht durch eine Eichmasse der Grösse s — durch den einen Kraftmesser (2) die Werte $M_1$, $M_2$, woraus der Rechner (4) die Werte $S_1 = M_1 - N_1$ und $S_2 = M_2 - N_2$ bildet und speichert, dass ferner die relativen Differenzen dieser Werte, nämlich

$$\frac{S_2 - S_1}{S_1} \; ; \; \frac{R_2 - R_1}{R_1} \quad ; \quad \frac{N_2 - N_1}{N_1}$$

gebildet und zu

$$P = \frac{N_2 - N_1}{N_1} \Big/ \frac{R_2 - R_1}{R_1} \text{ und}$$

$$Q = \frac{S_2 - S_1}{S_1} \Big/ \frac{R_2 - R_1}{R_1}$$

verarbeitet werden, worauf die Werte $N_2$, $R_2$, und $S_2$ wieder gelöscht werden, dass ferner der wahre Massenwert s des Eichgewichtsteins über externe Mittel in den Rechner eingegeben wird, so dass nach der Eichung im Festspeicher des Rechners (4) folgende Werte gespeichert sind : s, $R_1$, $N_1$, $S_1$, P, und Q,
— dass bei der Wägung einer unbekannten Masse unter unbekannten Schiefstellungs- und Beschleunigungsverhältnissen der Messwert M des einem Kraftmessers (2) und der Messwert R des anderen Kraftmessers (3) aufgenommen und mit den genannten gespeicherten Werten zum Wägeresultat der unbekannten Masse verarbeitet werden nach der Formel

$$m = \frac{s}{S_1 \cdot Q} \left\{ R_1 \frac{M - N_1 \cdot \frac{Q-P}{Q}}{R - R_1 \cdot \frac{Q-1}{Q}} - P \cdot N_1 \right\} .$$

**Claims**

1. A method of calibrating and operating a balance with a base plate (1) on which two independent dynamometers (2, 3) are mounted with elastic initial loads, one of which, dynamometer (2), determines the weight of the material being weighed, and the other, dynamometer (3), determines the weight of a reference mass (8, 22, 24), each dynamometer (2, 3) exhibits a load sensor (19), which converts the compressive or tensile force acting on it into an electric signal, each dynamometer (2, 3) exhibits a parallel guide (26), and the two dynamometers are mounted on the base plate (1) in such manner that the degrees of freedom of the two parallel guides (26) are parallel to each other and with a horizontal balance agree with the direction of the gravitational acceleration g, the two dynamometers (2, 3) exhibit a linear characteristic line and a computer (4) is present for mathematical processing of electric signals provided by the dynamometers (2, 3) and for receipt of external control commands, characterised in that

— in the calibration on the one hand with a horizontal balance, on the other hand with a balance which is placed in an inclined position at an angle $\alpha$, the following values, determined by the dynamometer (2, 3) are stored in the read-only memory : With an empty balance pan (18) through the one dynamometer (2) the values $N_1$, $N_2$ and through the other dynamometer (3) the values $R_1$, $R_2$, with full load — caused by a calibration mass of amount s — through the one dynamometer (2) the values $M_1$, $M_2$, from which the computer (4) forms and stores the values $S_1 = M_1 - N_1$ and $S_2 = M_2 - N_2$, that in addition the relative differences of these values, namely

$$\frac{S_2 - S_1}{S_1} \; ; \quad \frac{R_2 - R_1}{R_1} \; ; \quad \frac{N_2 - N_1}{N_1}$$

are formed and processed to

$$P = \frac{N_2 - N_1}{N_1} \bigg/ \frac{R_2 - R_1}{R_1} \quad \text{and}$$

$$Q = \frac{S_2 - S_1}{S_1} \bigg/ \frac{R_2 - R_1}{R_1}$$

whereupon the values $N_2$, $R_2$ and $S_2$ are cancelled again, that in addition the true mass value s of the calibration weight is fed via external means into the computer, so that after the calibration the following values are stored in the read-only memory of the computer (4) : s, $R_1$, $N_1$, $S_1$, P and Q,

— that in the weighing of an unknown mass under unknown conditions of angular deviation and acceleration the measured value M of the one dynamometer (2) and the measured value R of the other dynamometer (3) are received and processed with the said stored values to the weighing result of the unknown mass according to the formula

$$m = \frac{s}{S_1\, Q} \left\{ R_1\, \frac{M - N_1 \cdot \dfrac{Q-P}{Q}}{R - R_1 \cdot \dfrac{Q-1}{Q}} - P.N_1 \right\} \quad .$$

## Revendications

1. Procédé d'étalonnage et d'utilisation d'une balance comportant une embase (1) sur laquelle sont montés, avec des précontraintes élastiques, deux dynamomètres indépendants (2, 3) dont le premier (2) détermine le poids de l'objet à peser et dont le second (3) détermine le poids d'une masse de référence (8, 22, 24), chaque dynamomètre (2, 3) présente un récepteur de charge (19) qui convertit la pression ou la force de traction agissant sur lui en un signal électrique, chaque dynamomètre (2, 3) présente un guidage parallèle (26), et les deux dynamomètres sont montés sur l'embase (1) de façon que les degrés de liberté des deux guidages parallèles (26) soient parallèles entre eux et, la balance étant horizontale, coïncident avec la direction de l'accélération de la pesanteur g, les deux dynamomètres (2, 3) présentent des caractéristiques linéaires et il est prévu un ordinateur (4) pour traiter, par le calcul, les signaux électriques émis par les dynamomètres (2, 3) ainsi que pour recevoir des instructions extérieures, procédé caractérisé par le fait que

— lors de l'étalonnage d'une part avec la balance horizontale, d'autre part avec la balance inclinée d'un angle $\alpha$, on mémorise en mémoire morte les valeurs suivantes, déterminées par les dynamomètres (2, 3) : le plateau de la balance (18) étant vide, les valeurs $M_1$, $N_2$ déterminées par le second dynamomètre (2) et les valeurs $R_1$, $R_2$ déterminées par l'autre dynamomètre (3) ; à pleine charge — provoquée par une masse d'étalonnage de valeur s — les valeurs $M_1$, $M_2$ déterminées par le premier dynamomètre (2), à la suite de quoi l'ordinateur (4) forme et mémorise les valeurs $S_1 = M_1 - N_1$ et $S_2 = M_2 - N_2$, par le fait qu'en outre on forme les différences relatives de ces valeurs, à savoir :

$$\frac{S_2 - S_1}{S_1} \;;\quad \frac{R_2 - R_1}{R_1} \;;\quad \frac{N_2 - N_1}{N_1}$$

et qu'on les traite pour avoir

$$P = \frac{N_2 - N_1}{N_1} \Bigg/ \frac{R_2 - R_1}{R_1} \quad \text{et}$$

$$Q = \frac{S_2 - S_1}{S_1} \Bigg/ \frac{R_2 - R_1}{R_1}$$

après quoi on efface les valeurs $N_2$, $R_2$ et $S_2$, par le fait qu'en outre on entre dans l'ordinateur la valeur vraie s de la masse du poids d'étalonnage par des moyens extérieurs, de sorte qu'après l'étalonnage sont mémorisées, dans la mémoire morte de l'ordinateur (4), les valeurs suivantes : s, $R_1$, $N_1$, $S_1$, P, et Q,

— par le fait que, lors du pesage d'une masse inconnue dans des conditions inconnues d'inclinaison et d'accélération, on enregistre la valeur de mesure M du premier dynamomètre (2) et la valeur de mesure R du second dynamomètre (3) et qu'on les traite avec les valeurs mémorisées mentionnées pour aboutir au résultat du pesage de la masse inconnue, selon la formule

$$m = \frac{S}{S_1 \cdot Q} \left\{ R_1 \frac{M - N_1 \cdot \frac{Q-P}{Q}}{R - R_1 \cdot \frac{Q-1}{Q}} - P \cdot N_1 \right\}$$

# Fig.1

$m_x$

7

8

$m_r$

5

6

1  3  2  49 50  4

# Fig.2

$m_x$

18

17

12

14  10  13

2

9

26

19  20  15  11  16

**Fig.3**

**Fig. 4**